(19) Europäisches Patentamt
European Patent Office
Office européen des brevets

(11) **EP 2 704 464 A1**

(12) **EUROPEAN PATENT APPLICATION**
published in accordance with Art. 153(4) EPC

(43) Date of publication:
**05.03.2014 Bulletin 2014/10**

(51) Int Cl.:
*H04W 12/04* (2009.01)

(21) Application number: **11864364.2**

(22) Date of filing: **18.08.2011**

(86) International application number:
**PCT/CN2011/001382**

(87) International publication number:
**WO 2012/145873 (01.11.2012 Gazette 2012/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.04.2011 CN 201110106511**

(71) Applicant: **Dynamicode Company Limited Shanghai 201203 (CN)**

(72) Inventors:
• **HU, Yonggang**
  **Shanghai 201203 (CN)**

• **YANG, Bo**
  **Shanghai 201203 (CN)**
• **GAO, Mengxiong**
  **Shanghai 201203 (CN)**

(74) Representative: **Specht, Peter et al**
  **Loesenbeck - Specht - Dantz**
  **Patent- und Rechtsanwälte**
  **Am Zwinger 2**
  **33602 Bielefeld (DE)**

(54) **DYNAMIC TOKEN SEED KEY INJECTION AND DEFORMATION METHOD**

(57)   The present invention discloses a dynamic token seed key injection and deformation method. The method comprises steps of: generating in advance an initial seed key for a token and injecting the initial seed key into the token during manufacture; when distributing the token to an end user, performing an activation operation, and obtaining a new seed key, which is the final seed key for the future work of the token, by performing an operation based on an active code and the initial seed key; meanwhile, introducing the initial seed key into a dynamic password authentication system which performs the same deformation operation for the seed key as that performed in the token to obtain the same new seed key. After the activation operation in the token and the authentication system in this way, the final new seed key is different from the initial seed key injected by the token manufacturer, so that the privacy of the seed key is strengthened.

FIG. 1

**Description**

**TECHNICAL FIELD**

The present invention generally relates to a dynamic password technology, and particularly to a method of dynamic token seed key injection and deformation.

**BACKGROUND**

A dynamic password is a type of one-shot password. That is, each of the passwords can be used only once. The dynamic password can vary with time, count, and challenge information. The dynamic password has good security and is widely used in a variety of information systems. A dynamic token is a password device for generating the dynamic password.

The dynamic password is generated depending on a seed key. One of the different seed keys is installed in each token. The key, in conjunction with one or more of time, count, and challenge information, is used to generate the dynamic password. The seed key is a security base of the dynamic password. If the seed key is leaked, the security of the dynamic password will be greatly affected.

In practical dynamic token applications, in most cases, the seed key is generated, and injected to the token, by a manufacturer of the token. In the meanwhile, it is required for the manufacturer of the token to provide a seed file to the client in order to introduce it into a dynamic password authentication system, so that a dynamic password authentication may be performed. In a few cases, the seed key is generated by the client and then is provided to the manufacturer of the token for manufacture. No matter in any case, the seed of the token must be held by the manufacturer of the token.

In the above case, the privacy of the seed key is a critical problem. Especially for those financial and e-commerce clients who use the token extremely frequently, they are very sensitive to the security of the seed and worry about the leak of the seed key. Once the leak of the seed key occurs, a whole key authentication system will be inactive, and thus reliability of the whole key authentication system is reduced. There is no security in this case and it may cause a disastrous result.

Therefore, how to improve reliability and security of the whole authentication system is a problem to be solved in the art.

**SUMMARY OF THE INVENTION**

The present invention aims at the situation where the leak of the seed key during manufacture of the dynamic token causes the whole authentication system to miss reliability and security, and provides a method of dynamic token seed key injection and deformation. According to the method, by deformation of the seed key, a final seed key is different from an initial seed key injected by the token manufacturer, so that the privacy of the seed key is strengthened.

In order to achieve the above objective, the present invention adopts the following technical solution:

A method of dynamic token seed key injection and deformation, the method comprises steps of:

(1) generating an initial seed key;
(2) injecting the initial seed key into a corresponding dynamic token;
(3) introducing the initial seed key into a dynamic password authentication system;
(4) using, by the dynamic password authentication system, a randomly generated active code body and the introduced initial seed key to perform an encryption operation to obtain a corresponding active code;
(5) using, by the dynamic password authentication system, the obtained active code and the introduced initial seed key to perform an encryption operation to obtain a new seed key of the authentication system;
(6) inputting the active code to the dynamic token for activation; and
(7) using, by the dynamic token, the active code and the initial seed key to perform an encryption operation to obtain a new seed key of the dynamic token.

In the embodiment of the present invention, the activation in the dynamic token in step (6) comprises steps of:

(601) inputting the active code into the dynamic token;
(602) performing, by the dynamic token, a calculation operation based on the initial seed key and the active code body in the active code, to obtain a corresponding validation code; and
(603) checking, by the dynamic token, the validation code obtained by the calculation operation with a validation code in the input active code: if they are the same, the process turns to the step of generating the new seed key;

and if not the same, the activation fails.

With the above solution, the final seed key in the token and the authentication system is different from the initial seed key held by the token manufacturer. Even if the leak of the initial seed key occurs, the security of the dynamic token is not affected, so that the security of the seed key is greatly improved.

## BRIEF DESCRIPTION OF THE DRAWINGS

The present invention will be described hereinafter in conjunction with the accompanying drawings and specific embodiments of the invention.

FIG. 1 is a flowchart of the principal of the present invention; and
FIG. 2 is a flowchart for verifying an active code.

## DETAILED DESCRIPTION OF THE INVENTION

In order to make technical means, inventive features, objectives to be achieved, and effects achieved by the present invention understandable, the present invention is further described in conjunction with specific illustration of the drawings hereinafter.

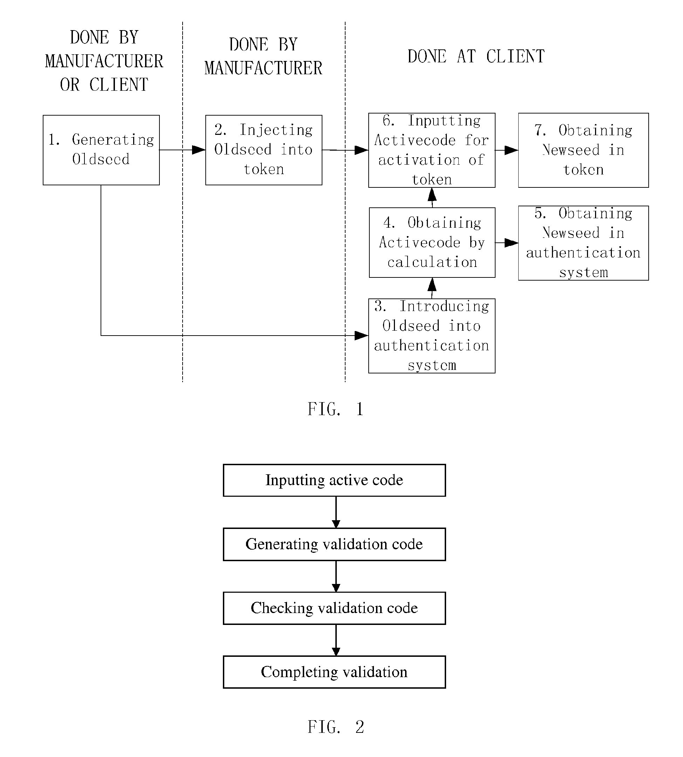

In order to prevent the seed key from leaking during manufacture of the dynamic token, according to the present invention, a method is provided for a dynamic token seed key injection and deformation. The method comprises the following steps (as shown in FIG. 1):

(1) prior to manufacturing the dynamic token, generating an initial seed key;
(2) injecting the initial seed key into a corresponding dynamic token;
(3) introducing the initial seed key into a dynamic password authentication system;
(4) using, by the dynamic password authentication system, a randomly generated active code body and the introduced initial seed key to perform an encryption operation to obtain a corresponding active code;
(5) using, by the dynamic password authentication system, the obtained active code and the introduced initial seed key to perform an encryption operation to obtain a new seed key of the authentication system;
(6) inputting the active code to the dynamic token for activation; and
(7) using, by the dynamic token, the active code and the initial seed key to perform an encryption operation to obtain a new seed key of the dynamic token.

Based on the above-mentioned solution, the specific implementation of the present invention is as follow (as shown in FIG. 1):

The first process is a process for generating an initial seed key Oldseed prior to manufacture, which is performed by a client (e.g., bank) or a token manufacturer.

The second process is a process for assembling a token for the initial seed key. That is, the manufacturer injects the initial seed key Oldseed into the dynamic token and this process must be performed by the token manufacturer.

The third process is a process for a twice-deformation of the seed, which must be performed at the client (e.g., bank) with no connection with the token manufacturer.

In the process, at first, the initial seed key Oldseed is introduced into the dynamic password authentication system. Then, a randomly generated active code body Activekey and the introduced initial seed key Oldseed are used by the authentication system to perform an encryption operation, in order to obtain an active code Activecode. In the meanwhile, the active code Activecode and the initial seed key Oldseed are used by the authentication system to perform an encryption operation, in order to obtain a new seed key Newseed in the authentication system. The deformation of the seed key in the authentication system is completed.

Regarding authentication of the token, the active code Activecode obtained by the operation in the authentication system is input into the dynamic token. The active code Activecode and the initial seed key Oldseed are used by the dynamic token to perform an encryption operation, in order to obtain a new seed key Newseed in the dynamic token. The deformation of the seed key in the dynamic token is completed. Since the active code Activecode and the initial seed key Oldseed are consistent with those in the authentication system, it is ensured that the generated new seed key Newseed is consistent with the one in the authentication, and that the token works normally.

On the basis of the above-mentioned solution, in order to prevent the problem of inputting wrong active code in the dynamic token and thus causing wrong activation, the present invention provides a solution of a validation code, as follow:

In the solution, the active code Activecode generated in the previous process is, in structure, divided into the active code body Activekey and a validation code Acc which is generated based on Oldseed and Activekey. With the validation code Acc, the wrong activation due to the inputting of the wrong active code Activecode may be prevented.

While the dynamic token is distributed to an end user, the active code Activecode is input into the dynamic token. At first, the validity of Activecode is checked in the dynamic token:

If the validation is passed, the active code Activecode and the initial seed key Oldseed injected in advance are used by the dynamic token to perform the same encryption operation as that done in the authentication system, in order to obtain a new seed key Newseed of the dynamic token, which is the same as the new seed key in the authentication system so as to ensure the normal work of the dynamic password authentication, and which is a final seed key for the future work of the token.

If the validation is not passed, the user is informed of failure of validation and is requested to re-input the active code.

In the process, the validity of the active code Activecode is checked by the dynamic token as follow (as shown in FIG. 2):

At first, the user inputs the active code Activecode into the dynamic token.

Then, a calculation operation is performed by the dynamic token based on the initial seed key Oldseed injected in advance and an active code body Activekey in the input active code Activecode to obtain a corresponding validation code Acc'.

At last, the validation code Ace' obtained by the calculation operation is checked by the dynamic token with the validation code Acc in the input active code Activecode: if they are the same, the process turns to the step of generating the new seed key Newseed; and if not the same, the activation failed.

When specifically implemented, the above-mentioned solution mainly involves three algorithms: the first one is an algorithm for generating the active code, the second one is an algorithm for generating the validation code of the active code, and third one is an algorithm for updating the seed key.

I. Algorithm for generating the active code Activecode

The generating of the active code is essentially the generating of a random number, which may be generated by the external system, or may be generated by the authentication system. The algorithm for generating is:

Main algorithm: Real Random Number. An encryption card or an USBkey is used to generate a real random number as the active code.
Backup algorithm: An algorithm for generating a high quality random number, such as BBS algorithm, is used to generate it.

II. Algorithm for the validation code Acc of the active code

Due to specificity of the token, in general, one token can be activated only once. Thus, if a wrong active code is input to activate the token, it may result in failure of the token.
For this reason, a validation code may be added into the active code. Once the input is wrong, the token can detect it and inform the failure of the activation. After the failure of the activation, re-activation may be performed.
The algorithm for the validation code of the active code is determined based on the algorithm for generating the dynamic password of the token.
As an example of the present invention, the following algorithm is adopted as the algorithm for the validation code of the active code for the token:

1. HS = SHA1(Oldseed, Activecode)
2. Performing a dynamic truncation, Sbits = DT(HS), the length of Sbits is 4 bytes;
The process of the truncation function DT is as follow:

1) Assuming HS = HS[0]...HS[19];
2) OffsetBits is the lowest 4 bits of String[19];
3) Offset = StToNum(OffsetBits); where 0 <= OffSet <= 15
4) P = HS[OffSet]...HS[OffSet+3];
5) Obtaining the lowest 31 bits of P.

3. Translating Sbits into numbers, Snum == StToNum(Sbits);
4. Obtaining the validation code, D = Snum mod 10^6 (Digit is the number of bits of the validation code).

Also, SM3 algorithm is adopted as the algorithm for the validation code of the active code for the token:

1. HS = SM3(Oldseed, Activecode);
2. Performing a dynamic truncation, Sbits = DT(HS), the length of Sbits is 4 bytes;
The process of the truncation function DT is as follow:

1) Assuming HS = HS[0]...HS[19];
2) OffsetBits is the lowest 4 bits of String[19];
3) Offset = StToNum(OffsetBits); where 0 <= OffSet <= 15
4) P = HS[OffSet]...HS[OffSet+3];
5) Obtaining the lowest 31 bits of P.

3. Translating Sbits into numbers, Snum == StToNum(Sbits);
4. Obtaining the validation code, D = Snum mod 10^6 (Digit is the number of bits of the validation code).

III. Algorithm for updating the seed key

There are many types of the algorithm for updating the seed key. As an example of the present invention, HMAC-SHAI algorithm is adopted as the algorithm for updating the seed key:

$$Newseed = HMAC\text{-}SHA1(Oldseed, Activecode, Acc).$$

Also, SM3 algorithm for updating the seed key of the token is adopted as the algorithm for updating the seed key:

In SM3 algorithm, the input data S is assembled in a sequence of Oldseed, Activecode, and Acc. If the number of bits is less than 512, 0 is filled at the end of bits till 512 bits.

$$HS = SM3(S);$$

$$Newseed = DT(HS);$$

DT is a truncation function. The rule for the truncation is similar to the rule for OATH truncation, specifically as follow:

The value of the last 5 bits of HS[31] is set as an offset value Offset. Assuming the number of bits of Newseed is N (N is an integral multiple of 8)

Cyclic truncation, Newseed = HS[Offset]HS[Offset+1]......HS[Offset+N/8]. If the truncation is not completed till the tail of HS, the truncation may continue from the beginning of HS.
In this example, the truncation function takes the front 160 bits of the SM3 operation result.
By the above process, both deformations in the dynamic token and in the authentication system are completed. Because the latter deformation process of the seed key is completely performed at the client and by the client, without any involvement of the token manufacturer, the deformed seed key is not known to the token manufacturer, so that the privacy of the seed key is improved.
The fundamental principals, main features, and advantages of the present invention has been shown and described in the foregoing. It should be appreciated by the skilled in the art that the present invention is not limited by the above-mentioned embodiments which, together with what is described in the specification, are only used to illustrate the principals of the present invention. Many changes and modifications may be made to the present invention without departing from the spirit and scope of the present invention. Those changes and modifications fall into the claimed scope of the present invention which is limited by the appended claims and the equivalent thereof.

**Claims**

1. A method of dynamic token seed key injection and deformation, **characterized in that**, the method comprises steps of:

   (1) generating an initial seed key;
   (2) injecting the initial seed key into a corresponding dynamic token;
   (3) introducing the initial seed key into a dynamic password authentication system;
   (4) using, by the dynamic password authentication system, a randomly generated active code body and the introduced initial seed key to perform an encryption operation to obtain a corresponding active code;
   (5) using, by the dynamic password authentication system, the obtained active code and the introduced initial seed key to perform an encryption operation to obtain a new seed key of the authentication system;
   (6) inputting the active code to the dynamic token for activation; and
   (7) using, by the dynamic token, the active code and the initial seed key to perform an encryption operation to obtain a new seed key of the dynamic token.

2. A method of dynamic token seed key injection and deformation according to claim 1, **characterized in that**, the activation in the dynamic token in step (6) comprises steps of:

   (601) inputting the active code into the dynamic token;
   (602) performing, by the dynamic token, a calculation operation based on the initial seed key and the active code body in the active code, to obtain a corresponding validation code;
   (603) checking, by the dynamic token, the validation code obtained by the calculation operation with a validation code in the input active code: if they are the same, the process turns to the step of generating the new seed key; and if not the same, the activation fails.

DONE BY
MANUFACTURER
OR CLIENT

DONE BY
MANUFACTURER

DONE AT CLIENT

| 1. Generating Oldseed | → | 2. Injecting Oldseed into token | → | 6. Inputting Activecode for activation of token | → | 7. Obtaining Newseed in token |

4. Obtaining Activecode by calculation → 5. Obtaining Newseed in authentication system

3. Introducing Oldseed into authentication system

FIG. 1

Inputting active code

↓

Generating validation code

↓

Checking validation code

↓

Completing validation

FIG. 2

7

<table>
<tr><td colspan="2">**INTERNATIONAL SEARCH REPORT**</td><td>International application No.<br><br>**PCT/CN2011/001382**</td></tr>
</table>

**A.  CLASSIFICATION OF SUBJECT MATTER**

H04W12/04 (2009.01) i

According to International Patent Classification (IPC) or to both national classification and IPC

**B.    FIELDS SEARCHED**

Minimum documentation searched (classification system followed by classification symbols)

IPC: H04L,H04W,H04Q

Documentation searched other than minimum documentation to the extent that such documents are included in the fields searched

Electronic data base consulted during the international search (name of data base and, where practicable, search terms used)

CPRSABS,VEN: token, cipher, password, cryptogram, encrypt+, key, seed, updat???, distort+, transform+, switch???

**C.    DOCUMENTS CONSIDERED TO BE RELEVANT**

| Category* | Citation of document, with indication, where appropriate, of the relevant passages | Relevant to claim No. |
|---|---|---|
| X | CN102025716A (BEIJING FEITIAN TECHNOLOGIES CO LTD) 20 Apr. 2011 (20.04.2011) description page 4 paragraph 0056 to page 6 paragraph 0084, Fig.1 | 1-2 |
| A | CN101826957A (INFOSEC TECHNOLOGIES CO LTD) 08 Sept. 2010 (08.09.2010) the whole document | 1-2 |
| A | CN101719826A (BEIJING FEITIAN TECHNOLOGIES CO LTD) 02 Jun. 2010 (02.06.2010) the whole document | 1-2 |
| A | US2009006858A1 (EMC CORP et al.) 01 Jan. 2009 (01.01.2009) the whole document | 1-2 |

☐ Further documents are listed in the continuation of Box C.        ☒ See patent family annex.

| | |
|---|---|
| *        Special categories of cited documents: | "T"   later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"   document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"document member of the same patent family |

| Date of the actual completion of the international search | Date of mailing of the international search report |
|---|---|
| 16 Dec. 2011 (16.12.2011) | 19 Jan. 2012 (19.01.2012) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10)62019451 | Authorized officer<br><br>LI, Fan<br><br>Telephone No. (86-10)62411227 |
|---|---|

Form PCT/ISA /210 (second sheet) (July 2009)

## INTERNATIONAL SEARCH REPORT
Information on patent family members

| | International application No. |
|---|---|
| | **PCT/CN2011/001382** |

| Patent Documents referred in the Report | Publication Date | Patent Family | Publication Date |
|---|---|---|---|
| CN102025716A | 20.04.2011 | NONE | |
| CN101826957A | 08.09.2010 | NONE | |
| CN101719826A | 02.06.2010 | NONE | |
| US2009006858A1 | 01.01.2009 | WO2009005860A1 | 08.01.2009 |
| | | US8060750B2 | 15.11.2011 |

Form PCT/ISA/210 (patent family annex) (July 2009)